# FASCICULE DE BREVET EUROPEEN

(11) **EP 0 402 242 B1**
(45) Date de publication et mention de la délivrance du brevet: **17.03.1993**
(21) Numéro de dépôt: 90401527.8
(22) Date de dépôt: 06.06.1990
(51) Int. Cl.: B60J 3/00

(54) **Cassette à miroir pour pare-soleil, notamment dans un habitacle d'automobile**
Spiegeleinheit für eine Sonnenblende, insbesondere in einem Fahrgastraum eines Kraftfahrzeuges
Mirror unit for a sun visor, notably in a passengeer compartment of an automobile

(30) Priorité: 06.06.1989 FR 8907473
(43) Date de publication de la demande: 12.12.1990
(73) Titulaire: ROCKWELL AUTOMOTIVE BODY SYSTEMS-FRANCE EN ABREGE:ROCKWELL ABS-FRANCE, 92082 Paris La Defense 2 (FR)
(72) Inventeur: Prillard, Charles, F-88360 Rupt/Mosele (FR)
(74) Mandataire: Hasenrader, Hubert

(56) Documents cités:
- EP-A- 0 261 989
- EP-A- 0 268 570
- US-A- 4 213 169
- US-A- 4 715 644

## Description

L'invention concerne une cassette à miroir pour un pare-soleil comprenant un volet qui est articulé sur la cassette de telle manière qu'il puisse pivoter entre une position de fermeture dans laquelle le volet recouvre le miroir et une position d'ouverture dans laquelle le miroir est dégagé, et qui est bloqué aux positions d'ouverture et de fermeture par des dispositifs d'arrêt constitués d'un élément d'arrêt fixe formé sur la cassette et d'un élément d'arrêt mobile se déplaçant avec le volet, l'articulation du volet sur la cassette comportant deux tétons alignés parallèles à un côté du volet, formés respectivement sur les bords latéraux du volet au voisinage dudit côté et s'étendant vers l'extérieur du volet.

Par la demande de brevet allemand DE-A- 37 03 511, on connaît une cassette à miroir, selon le préambule de la revendication 1, sur laquelle l'articulation du volet sur la cassette est réalisée à l'aide de tétons montés axialement coulissants dans un alésage formé sur le volet et coopérant avec des cavités formant paliers prévues en correspondance sur la cassette. Le volet est bloqué en position d'ouverture et de fermeture à l'aide de saillies coopérantes formées concentriquement à l'axe de pivotement, l'une d'elles étant fixe et formée sur la cassette, et l'autre étant formée sur l'extrémité externe du téton correspondant. Un ressort de compression est prévu pour que la saillie du téton soit fermement en prise avec la saillie correspondante de la cavité.

L'inconvénient de cette cassette connue est la fabrication et le montage difficiles des différentes pièces. Les alésages du volet et les cavités formant paliers nécessitent de prévoir des tiroirs rétractables dans les moules de fabrication de la cassette et du volet, ce qui augmente le coût des moules et diminue la cadence de fabrication. De plus, il s'avère particulièrement difficile et laborieux d'incorporer le ressort de compression, celui-ci devant être monté à l'état comprimé.

La demande de brevet français FR-A-2 629 768, publiée le 13 octobre 1989, décrit une autre cassette dans laquelle les tétons de l'articulation sont formés sur les bords latéraux de la cassette et coopèrent avec des cavités correspondantes ménagées sur les bords du volet.

L'inconvénient de cette cassette est que, d'une part, le moule de fabrication du volet nécessite des tiroirs rétractables pour la formation des cavités formant paliers et que, d'autre part, le montage du volet sur le boîtier nécessite d'introduire l'un des tétons dans la cavité correspondante, puis de déformer par élasticité le volet de manière à introduire le deuxième téton de force dans sa cavité, ce qui peut se traduire par des cassures, soit du volet, soit d'un téton. Cette opération de montage est d'autant plus difficile que le volet est petit et rigide.

On trouve également dans le commerce une cassette à miroir dans laquelle le volet comporte des cavités formant paliers et la cassette présente des tétons coopérant avec les paliers et dans laquelle l'élément d'arrêt mobile du volet est constitué par une arête en forme de V prévue sur le bord du volet voisin de l'alignement des cavités, et l'élément d'arrêt fixe de la cassette est constitué d'une lame à ressort appliquant sur le volet une force dirigée vers la face avant du boîtier.

Cette cassette connue présente les inconvénients de la cassette décrite dans la demande de brevet français FR-A-2 629 768 précitée.

Le but de la présente invention est de pallier ces inconvénients et de proposer une cassette à miroir du type mentionné ci-dessus qui, d'une part, soit d'un montage aisé, et qui, d'autre part, élimine la nécessité de prévoir des tiroirs rétractables dans les moules de fabrication du boîtier et/ou du couvercle, permettant ainsi de diminuer le coût des moules et d'augmenter la cadence de fabrication des pièces moulées.

Le but est atteint selon l'invention par le fait
que la cassette présente près de son bord supérieur longitudinal une fente de passage, destinée à permettre le montage du volet par la face arrière de la cassette, qui a une largeur au moins égale à l'épaisseur du volet et une longueur au moins égale à la distance séparant les bords opposés du volet portant lesdits tétons et qui présente dans chacune de ses zones d'extrémité latérales une excavation ouverte du coté de la face arrière de la cassette et destinée à former un demi-palier pour un téton dudit volet
et que la cassette est munie d'au moins un étrier qui est en appui sur le bord de volet voisin de l'alignement desdits tétons de manière à maintenir lesdits tétons dans leurs demi-paliers respectifs.

Grâce à cette structure, la cavité formant palier de l'art antérieur est remplacée par la paroi de la cassette sur laquelle le téton est en appui et par l'étrier maintenant le volet. Les moules de fabrication de la cassette et du volet ne nécessitent plus de tiroirs rétractables pour la formation des cavités, ce qui permet d'augmenter la cadence d'utilisation de ces moules et d'en diminuer le coût de fabrication. De plus, le montage du volet sur le boîtier est simplifié. Le bord du volet éloigné de l'axe d'articulation est présenté dans la fente par la face arrière du boîtier et on fait coulisser le volet dans ladite fente jusqu'à ce que les tétons soient en butée dans les excavations. On peut disposer le boîtier à l'horizontale avec sa face arrière dirigée vers le haut et laisser tomber le volet dans la fente. Il suffit ensuite de fixer le ou les étriers pour maintenir le volet.

Avantageusement, l'étrier est constitué par une lame élastique qui exerce sur le volet une force dirigée vers la face avant de la cassette. Cette disposition évite les cliquetis du volet lorsque la cassette est soumise à des vibrations.

Avantageusement, le bord du volet voisin de l'alignement des tétons présente au moins un élément d'arrêt mobile transversal constitué d'une arête en forme de V située entre deux méplats et l'étrier coopère avec ledit élément d'arrêt mobile et forme l'élément d'arrêt fixe d'un dispositif d'arrêt. Grâce à cette structure, le coût de fabrication de la cassette est moindre.

Avantageusement, l'étrier a la forme d'un U dont une branche d'extrémité loge dans une cavité ménagée dans la cassette et débouchant sur la face arrière de celle-ci, et dont l'autre branche d'extrémité est libre et coopère avec l'élément d'arrêt mobile.

De préférence, la cassette comporte deux étriers disposés au voisinage des bords latéraux du volet.

Avantageusement, l'excavation présente une gorge semi-circulaire conformée au téton correspondant et dont la paroi est prolongée par deux parois planes qui s'écartent légèrement vers la face arrière de la cassette. La gorge joue le rôle d'un demi-palier pour le téton correspondant, et la forme évasée de l'excavation facilite l'introduction du volet pendant la phase de montage, grâce au guidage des tétons par les parois planes.

De préférence, la cassette comporte une paroi latérale en regard de l'extrémité de chaque téton. Cette paroi latérale augmente la rigidité de la cassette.

D'autres avantages et caractéristiques de l'invention ressortiront à la lecture d'un mode de réalisation décrit ci-après à titre d'exemple non limitatif et en référence au dessin annexé dans lequel :
- la figure 1A montre un pare-soleil avec une cassette à miroir dont le volet est relevé ;
- la figure 1B montre un pare-soleil avec une cassette à miroir fermée par le volet ;
- la figure 2 est une vue de la face avant d'une deuxième cassette à miroir sans le volet ;

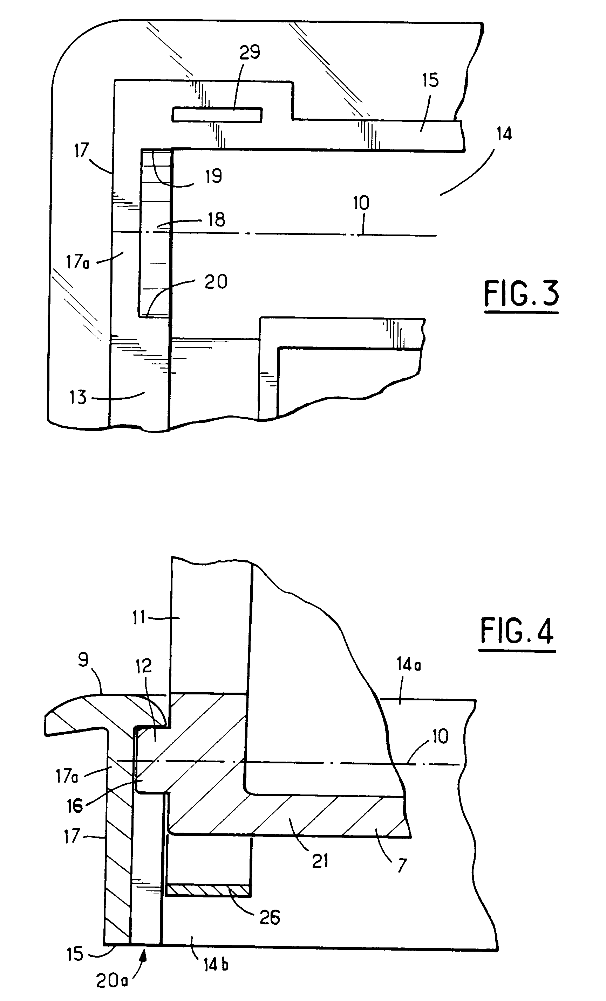

- la figure 3 est une vue à plus grande échelle d'un coin de la face arrière de la cassette à miroir sans le volet ;
- la figure 4 est une coupe à plus grande échelle selon la ligne IV-IV de la figure 2 et de la figure 6, montrant la région de l'axe de pivotement, le volet étant ouvert ;
- la figure 5 est une coupe à plus grande échelle de la région de l'axe de pivotement de la cassette avec le volet en position de fermeture selon la ligne V-V de la figure 2 ;
- la figure 6 est une coupe semblable avec le volet en position d'ouverture ; et
- la figure 7 montre à grande échelle le logement d'un téton.

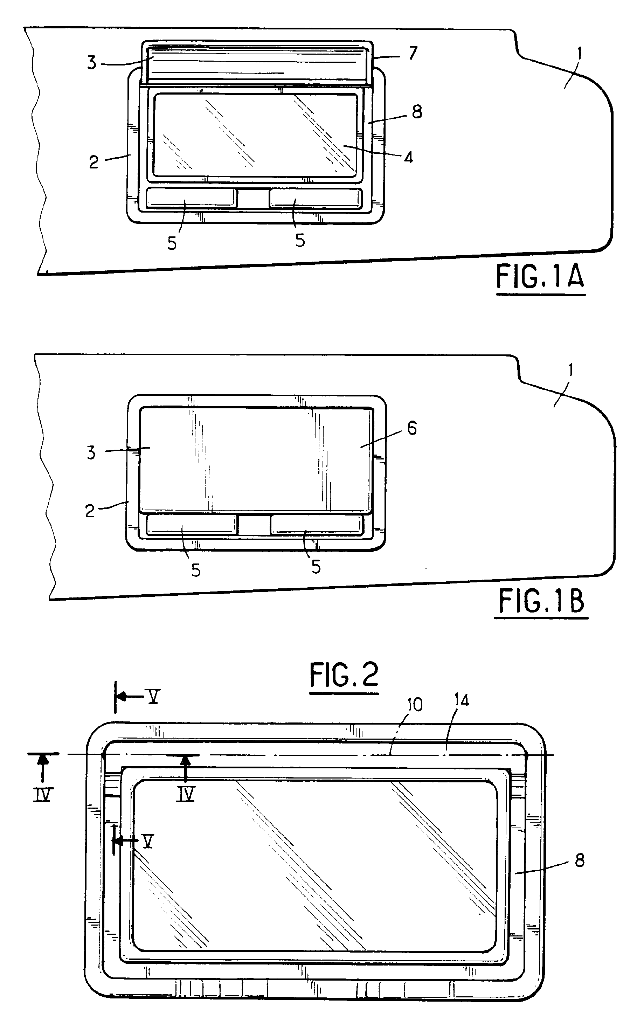

La figure 1A montre une cassette à miroir 2 encastrée dans un pare-soleil 1. La cassette 2 contient un miroir ou glace 4 qui peut être recouvert par un volet 3 monté pivotant. Le volet 3 occupe sa position d'ouverture sur la figure 1A. La cassette 2 peut contenir en plus, mais ce n'est pas obligatoire, des dispositifs d'éclairage 5, par exemple sous forme de petites ampoules recouvertes par une lame de verre opale. La figure 1B montre le pare-soleil 1 avec le volet 3 de la cassette 2 en position de fermeture. Le volet 3 présente une face externe 6 plane ou légèrement bombée et présente un bourrelet 7 sur le pourtour de sa face interne qui loge dans une rainure 8 de forme rectangulaire ménagée près du pourtour de la face avant 9 de la cassette 2, lorsque le volet 3 est rabattu. Le volet 3 peut pivoter autour d'un axe de pivotement 10 situé au voisinage du bord supérieur longitudinal de la cassette 2 dans la partie correspondante de la rainure 8.

Les éléments mâles de l'articulation du volet 3 sur la cassette 2 sont constitués par deux tétons 12 alignés et parallèles au bord 21 du volet 3 voisin du bord supérieur longitudinal de la cassette 2, qui sont formés respectivement sur les bords latéraux 11 du volet 3 perpendiculaires au bord 21. Les tétons 12 sont au voisinage de ce bord 21 et s'étendent vers l'extérieur du volet 3. Ils logent au moins partiellement dans des logements formant demi-paliers prévus dans les bords opposés 13 de la cassette et débouchant dans la rainure.

La figure 2 montre une vue de la face avant de la cassette 2 sans le volet 3 et ne comportant pas de dispositifs d'éclairage 5. Comme on le voit sur cette figure et les figures suivantes, la cassette 2 présente au voisinage de l'axe de pivotement 10 une fente 14 qui a une largeur au moins égale à l'épaisseur du volet 3. La fente 14 débouche sur la face avant 9 de la cassette 2 par un orifice 14a ayant une longueur au moins égale à la longueur du volet 3 comprise entre les deux tétons 12 et débouche sur la face arrière 15 de la cassette 2 par un orifice 15b ayant une longueur au moins égale à la distance séparant les extrémités libres 16 des deux tétons 12.

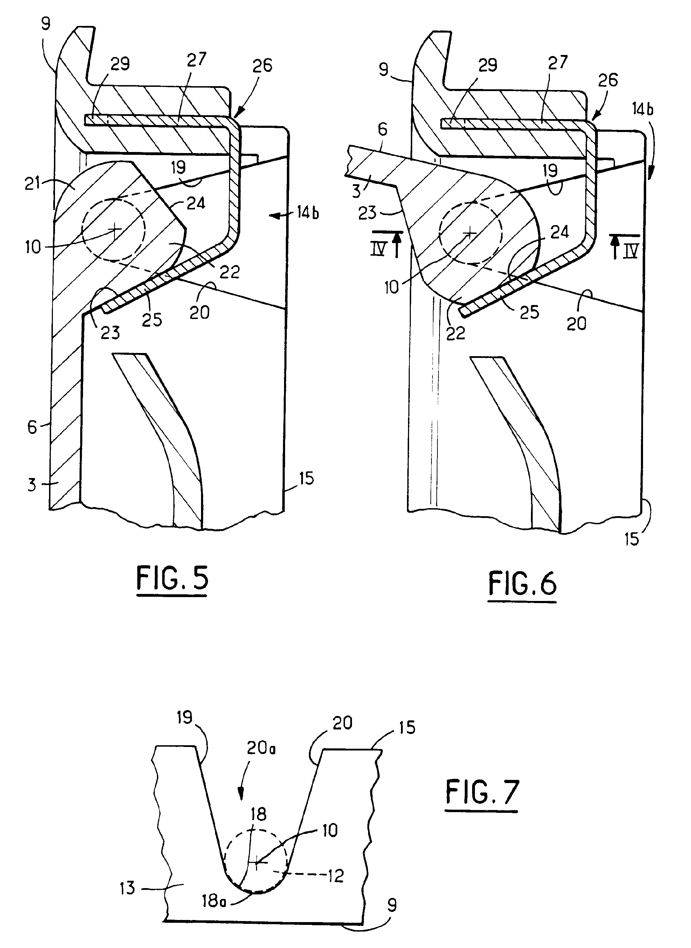

La fente 14 peut être ouverte en face des extrémités 16 des tétons 12 et du côté des faces latérales 17 de la cassette 2 (figure 7), mais de préférence les faces latérales 17 sont obturées vis-à-vis des extrémités 16 des tétons 12 par des parois 17a qui renforcent la rigidité de la cassette 2.

Le logement de chaque téton 12 est formé par une gorge semi-cylindrique 18 délimitée par la paroi 18a du bord correspondant 13 de la cassette 2 située près du téton 12 et du côté de la face avant 9 de la cassette 2 par rapport à l'axe de pivotement 10. Cette gorge semi-cylindrique 18 est ouverte du côté de la face arrière 15 de la cassette 2 grâce à des parois planes 19 et 20 qui prolongent la paroi 18a, qui délimitent la partie d'extrémité de la fente 14 et qui s'écartent légèrement vers la face arrière 15. La fente 14 présente ainsi, dans chacune de ses zones voisines des tétons 12, une excavation 20a débouchant sur la face arrière 15 de la cavité 29 dans l'orifice 14b.

Le volet 3 est monté sur la cassette 2 en présentant son bord éloigné des tétons 12 dans l'orifice 14b du côté de la face arrière 15 de la cassette 2, puis en le faisant coulisser dans la fente 14 jusqu'à ce que les tétons 12 logent dans leurs gorges respectives 18.

Comme on le voit sur les figures 5 et 6, le bord 21 du volet 3 voisin de l'axe de pivotement 10 comporte sur le bourrelet 7 adjacent une arête 22 en forme de V présentant deux méplats 23 et 24 qui peuvent être en contact, en alternance, suivant la position d'ouverture ou de fermeture du volet 3, avec une branche d'extrémité libre 25 d'une lame métallique 26, formant ressort et en forme de U, la deuxième branche d'extrémité 27 de cette lame élastique 26 étant fixée dans une cavité 29 prévue dans la paroi de la cassette 2 voisine de l'axe de pivotement 10 et débouchant sur la face arrière 15, à l'aide de moyens d'encliquetage. La lame élastique 26 forme ainsi un étrier qui maintient les tétons 12 du volet 3 dans leurs gorges respectives 18. La lame élastique 26 exerce sur le volet 3 par l'intermédiaire des méplats 23 ou 24 une force dirigée vers la face avant 9 de la cassette 2, ce qui élimine les vibrations et cliquetis du volet 3 lors du passage du véhicule dans les nids de poule.

La lame élastique 26 en coopération avec les méplats 23 et 24 constitue un dispositif d'arrêt du volet 3 aux positions de fermeture et d'ouverture, la branche d'extrémité libre 25 de la lame élastique 26 formant l'élément d'arrêt fixe et l'arête 22 en combinaison avec les méplats 23 et 24 formant l'élément d'arrêt mobile avec le volet 3.

De préférence, il est prévu deux dispositifs d'arrêt, chacun d'eux étant disposé au voisinage d'un des bords latéraux 11 du volet 3.

Dans l'exemple de réalisation décrit ci-dessus, la lame élastique 26 constitue à la fois l'élément d'arrêt fixe et l'étrier de maintien du volet 3 sur la cassette 2 empêchant le volet 3 de s'échapper. Il va de soi, que l'on peut maintenir le volet 3 autour de son axe de pivotement 10, à l'aide d'un étrier indépendant du dispositif d'arrêt et fixé sur la cassette 2, au voisinage de l'axe de pivotement 10 et du côté de la face arrière 15 de la cassette. Cet étrier peut être disposé au voisinage d'un téton 12 ou au voisinage du bord 21 de la cassette 2.

## Revendications

1. Cassette à miroir pour un pare-soleil comprenant un volet (3) qui est articulé sur la cassette (2) de telle manière qu'il puisse pivoter entre une position de fermeture dans laquelle le volet (3) recouvre le miroir (4) et une position d'ouverture dans laquelle le miroir (4) est dégagé, et qui est bloqué aux positions d'ouverture et de fermeture par des dispositifs d'arrêt constitués d'un élément d'arrêt fixe (25) formé sur la cassette (2) et d'un élément d'arrêt mobile (23, 24) se déplaçant avec le volet (3), l'articulation du volet (3) sur la cassette (2) comportant deux tétons alignés (12) parallèles à un côte (21) du volet (3), formés respectivement sur les bords latéraux (11) du volet (3) au voisinage dudit côté (21) et s'étendant vers l'extérieur du volet (3), caractérisée en ce que la cassette (2) présente près de son bord supérieur longitudinal une fente de passage (14), destinée à permettre le montage du volet (3) par la face arrière (15) de la cassette (2), qui a une largeur au moins égale à l'épaisseur du volet (3), et une longueur au moins égale à la distance séparant les bords opposés (11) du volet (3) portant lesdits tétons (12) et qui présente dans chacune de ses zones d'extrémité latérales une excavation (20a) ouverte du côte de la face arrière (15) de la cassette (2) et destinée à former un demi-palier pour un téton (12) dudit volet (3), et
en ce que la cassette (2) est munie d'au moins un étrier (26) qui est en appui sur le bord de volet voisin de l'alignement desdits tétons (12) de manière à maintenir lesdits tétons (12) dans leurs demi-paliers respectifs.

2. Cassette selon la revendication 1, caractérisée en ce que l'étrier est constitue par une lame élastique qui exerce sur le volet (3) une force dirigée vers la face avant de la cassette.

3. Cassette selon la revendication 2, caractérisée en ce que le bord (21) du volet (3) voisin de l'alignement desdits tétons présente au moins un élément d'arrêt mobile transversal constitue d'une arête (22) en forme de V située entre deux méplats (23, 24) et en ce que l'étrier (26) coopère avec ledit élément d'arrêt mobile et forme l'élément d'arrêt fixe d'un dispositif d'arrêt.

4. Cassette selon la revendication 3, caractérisée en ce que l'étrier (26) a la forme d'un U dont une branche d'extrémité (27) loge dans une cavité (29) ménagée dans la cassette (2) et débouchant sur la face arrière (15) de celle-ci, et dont l'autre branche d'extrémité (25) est libre et coopère avec l'élément d'arrêt mobile.

5. Cassette selon l'une quelconque des revendications 1 à 4, caractérisée en ce qu'elle comporte deux étriers (26) disposés au voisinage des bords latéraux (11) du volet (3) portant lesdits tétons (12).

6. Cassette selon l'une quelconque des revendications 1 à 5, caractérisée en ce que l'excavation (20a) présente une gorge (18) semi-circulaire conformée au téton correspondant (12) et dont la paroi (18a) est prolongée par deux parois planes (19, 20) qui s'écartent légèrement vers la face arrière (15) de la cassette (2).

7. Cassette selon l'une quelconque des revendications 1 à 6, caractérisée en ce qu'elle comporte une paroi latérale (17a) en regard de l'extrémité (16) de chaque téton (12).

## Patentansprüche

1. Spiegelkassette für eine Sonnenblende mit einer Klappe (3), die an der Kassette (2) derart angelenkt ist, daß sie zwischen einer Schließstellung, in der die Klappe (3) den Spiegel (4) bedeckt, und einer Öffnungsstellung schwenkbar ist, in der der Spiegel (4) frei ist, und die in der Öffnungs- und Schließstellung durch Sperr- oder Haltevorrichtungen blockiert ist, die von einem festen Sperr- oder Halteelement (25), das an der Kassette (2) ausgebildet ist, und einem beweglichen Sperr- oder Halteelement (23,24) gebildet wird, das sich mit der Klappe (3) bewegt, wobei die Anlenkung der Klappe (3) an der Kassette (2) zwei ausgerichtete zu einer Seite (21) der Klappe (3) parallele Vorsprünge (12) aufweist, die ,jeweils an den seitlichen Rändern (11) der Klappe (3) in der Nähe dieser Seite (21) ausgebildet sind und sich zum Äußeren der Klappe (3) erstrecken, dadurch gekennzeichnet,
daß die Kassette (2) in der Nähe ihres oberen Längsrandes eine Durchtrittsspalte oder -kerbe (14) aufweist, die dazu dient, die Montage der Klappe (3) durch die Hinterseite (15) der Kassette (2) zu erlauben, die eine Breite hat, die wenigstens gleich der Dicke der Klappe (3) ist, und eine Länge hat, die wenigstens gleich dem Abstand ist, der die einander gegenüberliegenden Ränder (11) der Klappe (3), die die Vorsprünge (12) trägt, trennt, und die in einer jeden ihrer seitlichen Endzonen eine Mulde (20a) aufweist, die zur Seite der Hinterseite (15) der Kassette (2) offen ist und dazu dient, ein Halblager für einen Vorsprung (12) der Klappe (3) zu bilden, und
daß die Kassette (2) mit wenigstens einem Bügel (26) versehen ist, der gegen den Rand der Klappe in der Nähe der Ausrichtung der Vorsprünge (12) derart drückt, daß er die Vorsprünge (12) in ihren entsprechenden Halblagern hält.

2. Kassette nach Anspruch 1, dadurch gekennzeichnet, daß der Bügel aus einer elastischen Zunge gebildet ist, die auf die Klappe (3) eine Kraft ausübt, die zur Vorderseite der Kassette hin ausgerichtet ist.

3. Kassette nach Anspruch 2, dadurch gekennzeichnet, daß der Rand (21) der Klappe (3) in der Nähe der Ausrichtung der Vorsprünge wenigstens ein bewegliches Querhalteelement aufweist, das eine Kante (22) in Form eines V aufweist, die zwischen zwei Abflachungen (23,24) angeordnet ist, und daß der Bügel (26) mit dem beweglichen Halteelement zusammenwirkt und das feste Halteelement einer Halte- oder Sperrvorrichtung bildet.

4. Kassette nach Anspruch 2, dadurch gekennzeichnet, daß der Bügel (26) die Form eines U aufweist, von dem ein Endschenkel (27) in einem Hohlraum (29) liegt, der in der Kassette (2) ausgebildet ist, und an der Hinterseite (15) von dieser mündet, und von dem der andere Endschenkel (25) frei ist und mit dem beweglichen Halteelement zusammenwirkt.

5. Kassette nach einem der Ansprüche 1 bis 4, dadurch gekennzeichnet, daß sie zwei Bügel (26) aufweist, die in der Nähe der seitlichen Ränder (11) der Klappe (3), die die Vorsprünge (12) tragen, angeordnet ist.

6. Kassette nach einem der Ansprüche 1 bis 5, dadurch gekennzeichnet, daß die Mulde (20a) einen halbkreisförmigen Hals (18) aufweist, der konform ist zum entsprechenden Vorsprung (12) und dessen Seitenwand (18a) durch zwei ebene Seitenwände (19,20) verlängert wird, die sich in Richtung der Hinterseite (15) der Kassette (2) leicht voneinanderweg bewegen.

7. Kassette nach einem der Ansprüche 1 bis 6, dadurch gekennzeichnet, daß sie eine seitliche Seitenwand (17a) gegenüber dem Ende (16) eines ,jeden Vorsprungs (12) aufweist.

## Claims

1. Mirror cassette for a sun visor comprising a flap (3) which is hinged to the cassette (2) in such a manner as to be capable of pivoting between a closed position in which the flap (3) covers the mirror (4), and an open position in which the mirror (4) is uncovered, with the flap being locked in its open and closed positions by stop devices constituted by a fixed stop element (25) formed on the cassette (2) and a moving stop element (23, 24) that moves with the flap (3), the hinge for connecting the flap (3) to the cassette (2) being constituted of two stubs (12) which are parallel to one of the sides (21) of the flap (3), said stubs being formed on respective side edges (11) of the flap (3) in the vicinity of said edge (21) and projecting out from from the flap (3), characterized
in that the cassette (2) has a through slot (14) close to its top longitudinal edge enabling the flap (3) to be assembled to the cassette (2) from the rear face (15) of the cassette (2), the width of the slot being not less than the thickness of the flap (3) and the length of the slot being not less than the distance between the opposite edges (11) of the flap (3) carrying said stubs (12), each of the lateral end zones of the slot including a hollow (20a) which is open towards the rear face (15) of the cassette (2) and which is intended to form a half-bearing for a stub (12) of said flap (3), and
in that the cassette (2) is provided with at least one bracket (26) bearing against the edge of the flap which is adjacent to the alignment of said stubs (12) so as to hold said stubs (12) in their respective half-bearings.

2. Cassette according to claim 1, characterized in that the bracket is constituted by a spring blade which exerts a force on the flap (3) directed towards the front face of the cassette.

3. Cassette according to claim 2, characterized in that the edge (21) of the flap (3) which is adjacent to the alignment of said stubs includes at least one transverse moving stop element constituted by a V-shaped tab (22) situated between two flats (23, 24), and in that the bracket (26) co-operates with said moving stop element and constitutes the fixed stop element of a stop device.

4. Cassette according to claim 3, characterized in that the bracket (26) is U-shaped, having one end branch (27) received in a cavity (29) formed in the cassette (2) and opening out to the rear face (15) thereof, and having its other end branch (25) cantilevered out from the first and co-operating with the moving stop element.

5. Cassette according to any one of claims 1 to 4, characterized in that it includes two brackets (26) disposed in the vicinity of the side edges (11) of the flap (3) carrying said stubs (12).

6. Cassette according to any one of claims 1 to 5, characterized in that the hollow (20a) has a semicircular groove (18) matching the corresponding stub (12) with the wall (18a) of the groove being extended by two plane walls (19, 20) which flare slightly towards the rear face (15) of the cassette (2).

7. Cassette according to any one of claims 1 to 6, characterized in that it includes a side wall (17a) facing the end (16) of each stub (12).
